Europäisches Patentamt

European Patent Office

Office européen des brevets

(11) Publication number: 0 405 965 A2

# EUROPEAN PATENT APPLICATION

(21) Application number: 90307069.6

(22) Date of filing: 28.06.90

(51) Int. Cl.5: G06K 7/10

(30) Priority: 29.06.89 US 372805

(43) Date of publication of application:
02.01.91 Bulletin 91/01

(84) Designated Contracting States:
DE FR GB

(71) Applicant: NCR CORPORATION
World Headquarters
Dayton, Ohio 45479(US)

(72) Inventor: Leyshon, Frank A.
519 North Seventh Street
Cambridge, Ohio 43725(US)
Inventor: McClain, Herbert Don
R.R. No. 2
Quaker City, Ohio 43773(US)
Inventor: Watson, David Allen
2775 Rix Mills Road
New Concord, Ohio 43762(US)

(74) Representative: Robinson, Robert George
International Patent Department NCR Limited
915 High Road North Finchley
London N12 8QJ(GB)

(54) Detector assembly.

(57) A detector assembly (20) for use with an optical reader comprises a hollow housing (22,24) in which is mounted on the central axis of the housing a collection lens (54), a routing mirror (76), a light filter (56) and a photodetector (58). A focusing lens (52) mounted in the side of the housing (22,24) and on an axis which is perpendicular to the central axis of the housing (22,24) directs the scanning light at the routing mirror (76) which in turn reflects the light in a scanning direction. The reflected scanning light is focused by said collection lens (54) on said photodetector (58) which generates electrical signals in response to receiving the reflected light.

FIG. 1

## DETECTOR ASSEMBLY

The present invention relates to bar code readers, and more particularly to a low-cost detector assembly for use with a bar code reader.

In present day optical bar code readers which are utilized in checkout counters for reading coded labels attached to the purchased merchandise items, a demand has arisen for the development of low cost compact scanners which can be used where the checkout operator is in a sitting position during the checkout operation. An example of this type of optical scanner may be found in US-A-4 797 551. As the elements of the scanner and the distances between the elements become smaller, it was found that the alignment of the optical elements to each other became very hard to accomplish and very time consuming which increased the cost of the scanner.

US-A-4 786 798 describes a lens assembly adapted for use in a laser scanning system. The assembly includes a holder in which are mounted in alignment a collection lens, a filter and a photodetector. The collection lens has a mirror mounted on the rear face thereof facing the filter and orientated at a 45 degree angle to the central axis of the lens for receiving and reflecting a laser beam onto the axis of the lens.

Respective small diverging and coverging lens portions, formed on opposite sides of the lens and in alignment with its central axis, expand and focus the received laser beam on the target. Respective large diameter converging lens portions, formed on opposite sides of the lens about the respective small diameter diverging and converging lens positions and in alignment with the axis of the lens, collect and focus on the photodetector the light being reflected from the target. It should be noted that the construction of such a collection lens is rather costly.

It is an object of the invention to provide a low-cost detector assembly having a construction which enables the use of a low cost collection lens therein.

Thus, according to the invention, there is provided a detector assembly for use with an optical reader, including a housing having a larger opening at one end than at the opposite end in which housing are mounted on an axis thereof a first optical member and a photodetector, wherein light entering the housing at an angle to said axis is directed by routing means along said axis in a scanning direction, and the reflected scanning light is focused by said first optical member on said photodetector which generates electrical signals in response to receiving the reflected light, characterized in that said routing means is positioned between said larger opening and said first optical member and in that there is provided a second optical member mounted in an aperture in said housing for directing scanning light on to said routing means.

The housing of the detector assembly of a preferred embodiment comprises upper and lower plastic housing members which are joined together forming a unitary structure. Rigidly mounted under tight tolerances in the structure are a routing mirror, a collection lens, a light filter and a photodetector which are used in the operation of the scanner. The structure includes snap fit portions and locating pins so that it may be accurately aligned and assembled into the scanner. The assembly may be interchanged between different scanners when required.

The invention will now be described, by way of example, with reference to the accompanying drawings, in which:-

Fig. 1 is an exploded perspective view of the detector assembly of the present invention showing the location of a routing lens, a collection lens, a routing mirror, a light filter and a photodetector;

Fig. 2 is a front elevational view of the detector assembly showing the location of the routing mirror;

Fig. 3 is a side elevational view of the detector assembly;

Fig. 4 is a top elevational view of the detector assembly showing the orientation of the routing mirror;

Fig. 5 is a front elevational view of the collection lens;

Fig. 6 is a side elevational view of the collection lens;

Fig. 7 is a front elevational view of the routing mirror mount assembly; and

Fig. 8 is a side elevational view of the routing mirror mount assembly.

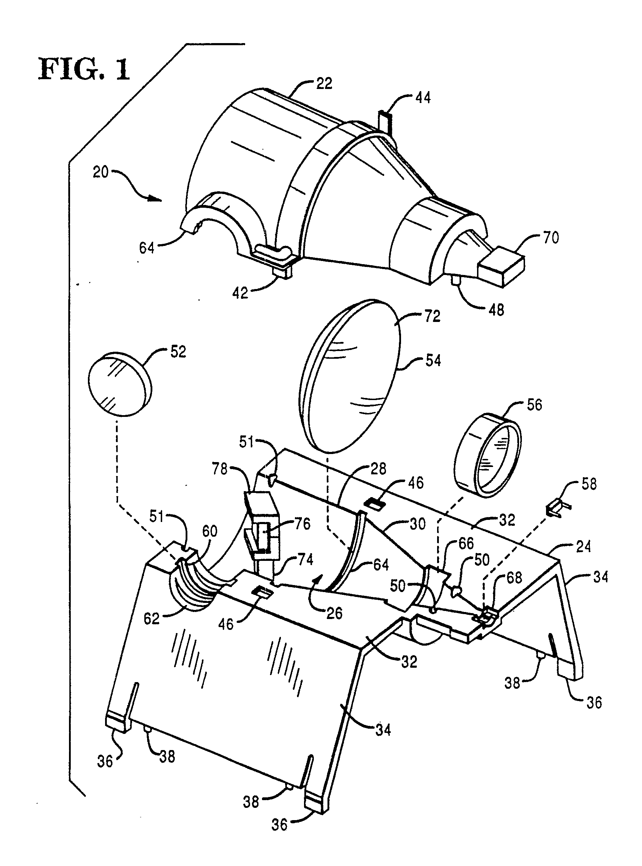

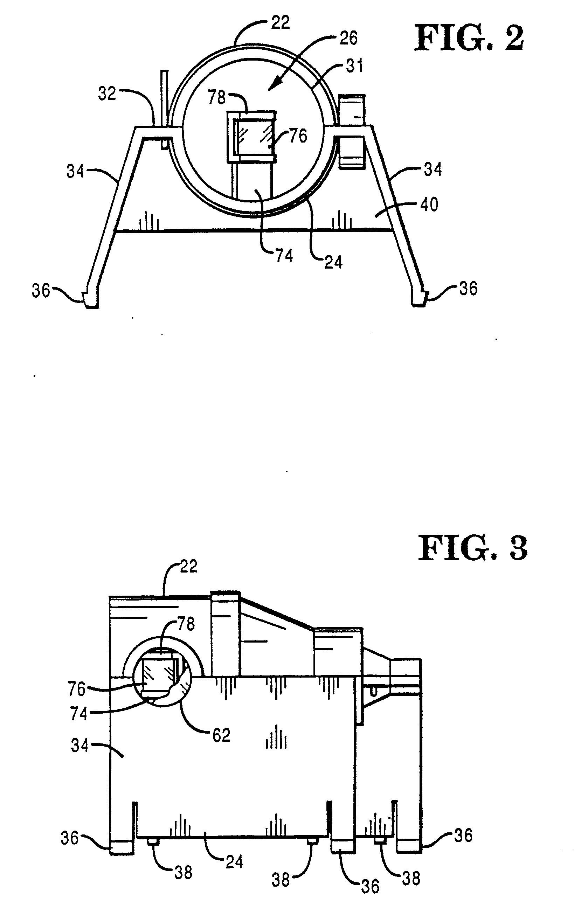

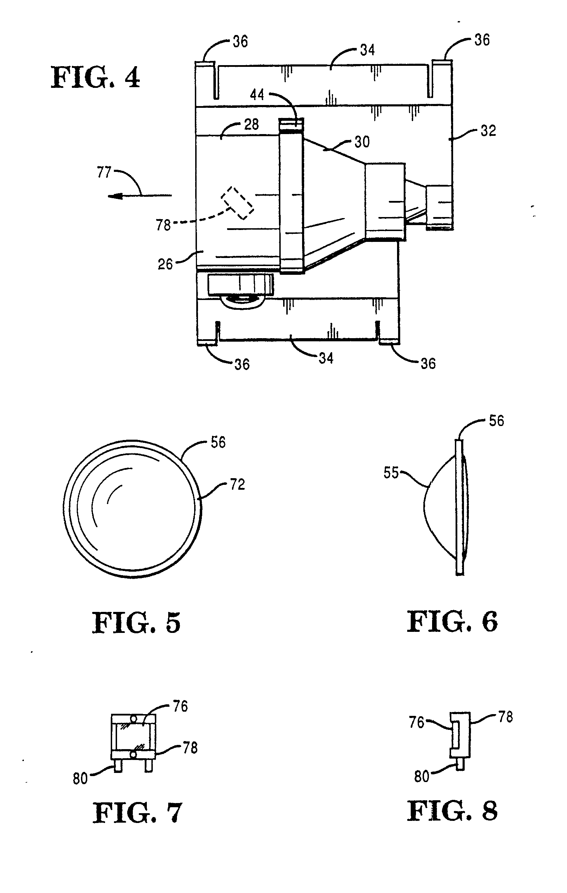

Referring to Figs. 1-4 inclusive, there are shown various views of the detector assembly of the present invention. There is shown in Fig. 1 an exploded view of the detector assembly which is generally indicated by the numeral 20 and includes an upper housing member 22 and a lower housing member 24 both of which may be moulded of any type of polycarbonate plastic material. Both housing members are formed with recessed interiors which, when the housing members are joined together, form a cavity 26 (Figs. 1 and 4) which includes a constant width front portion 28 and a cone shaped rear portion 30. As best seen in Fig. 2, the cavity 26 is formed in a circular configuration and includes a circular opening 31.

The lower housing member 24 includes a horizontal shelf portion 32 (Figs. 1 and 4) which terminates in a pair of depending support portions 34 for supporting the assembly 20 when mounted in the optical scanner. To accomplish this mounting of the assembly, each of the support portions 34 include a pair of depending leg portions 36 which are flexible to allow the assembly to be snapped into engagement with the scanner. The support portions 34 also include locating pins 38 (Figs. 1 and 3) for locating the assembly 20 in the scanner. A rib member 40 (Fig. 2) mounted between the support portions 34 provides structural support for the support portions 34 and prevents the assembly 20 from vibrating when mounted in the scanner.

As shown in Fig. 1, the upper housing member 22 includes a pair of depending leg portions 42, one of which is shown in Fig. 1. The opposite leg portion (not shown) is rotatably secured to the side of the housing member 22 and has a movable extension portion 44 (Figs. 1 and 4) which enables the leg portions 42 to be snapped into engagement with apertures 46 located in the shelf portion 32 of the lower housing member 24 for joining the housing members 22 and 24 together forming the assembly 20. Located towards the rear portion of the housing member 22 are a pair of depending locating pins 48 which are positioned in recessed portions 50 in the lower housing member 24 for locating the upper housing member 22 on the lower housing member 24.

As shown in Figs. 1 and 4, the lower housing member 24 includes a number of recessed areas for accommodating some of the scanning elements used in generating a scanning pattern and for generating signals representing the data read from the bar code label. Included in the elements is a focusing lens 52, a collection lens 54, a light filter 56 and a photodetector 58. The focusing lens 52 is mounted in a circular slot 60 located in a circular aperture 62 extending through the side of the lower housing member 24 and through a side housing extension portion 64 of the upper housing member 22 and formed when the housing members 22 and 24 are joined. The collection lens 54, the light filter 56 and the photodetector 58 are mounted on the central axis of the assembly 20. The focusing lens 52 is mounted on the central axis of the aperture 62 which is perpendicular to the axis of the assembly 20.

In a similar manner, the collection lens 54 is mounted in a circular slot 64 located in the cavity 26 and formed when the housing members 22 and 24 are assembled into the assembly 20 while the light filter 56 is located in a circular slot 66 formed in a similar manner. The photodetector 58 is mounted in a slot 68 located in the shelf portion 32 of the lower housing member 24 which communicates with the end of the cavity 26 and in a rear portion 70 of the upper housing member 22. As seen in Fig. 6, the collection lens 54 has a biconcave lens configuration 55 for focusing the collected light on the photodetector 50. Because of the biconcave configuration, the lens 54 is required to have a straight edge portion 72 (Figs. 1 and 5) for insertion in the slot 64.

Referring to Figs 1, 2 and 4, there is shown mounted in the front portion of the cavity 26 in the lower housing member 24 a vertical support member 74 on which is mounted a routing mirror 76 (Figs. 7 and 8) moulded into a support member 78. The face of the mirror 76 is mounted at a 45 degree angle to both of the central axes of the assembly 20 and the aperture 62. A pair of locating pins 80 depending from the lower edge of the member 78 enables the member 78 and the mirror 76 to be secured to the support member 74 and to be accurately aligned with the focusing lens 52 and the pattern generating mirrors (not shown) in the scanner.

During the operation of the optical reader, scanning light will be directed through the focusing lens 52 which directs the light at the routing mirror 76 which in turn reflects the scanning light in a scanning direction represented by the arrow 77 in Fig. 4 and along the central axis of the assembly 20. Light reflected from the scanned coded label is directed towards the collection lens 54 which collects the light and focuses the light at the photodetector 58 through the filter 56 which filters out certain frequencies of light such as those in the ultraviolet spectrum which might interfere with the operation of the photodetector 58.

## Claims

1. A detector assembly (20) for use with an optical reader, including a housing (22,24) having a larger opening at one end than at the opposite end in which housing (22,24) are mounted on an axis thereof a first optical member (54) and a photodetector (58), wherein light entering the housing (22,24) at an angle to said axis is directed by routing means (76) along said axis in a scanning direction, and the reflected scanning light is focused by said first optical member (54) on said photodetector (58) which generates electrical signals in response to receiving the reflected light, characterized in that said routing means (76) is positioned between said larger opening and said first optical member (54) and in that there is provided a second optical member (52) mounted in an aperture (60) in said housing (22,24) for directing scanning light on to said routing means (76).

2. A detector assembly according to claim 1, characterized by a first support member (74) mounted in said housing (22,24) between said larger opening and said first optical member (54) for supporting said routing means (76).

3. A detector assembly according to claim 2, characterized in that said routing means (76) is a mirror secured to a second support member (78) which includes locating means (80) for securing said second support member (78) on said first support member (74).

4. A detector assembly according to claim 3, characterized in that said locating means include a plurality of first pin members (80).

5. A detector assembly according to either claim 3 or claim 4, characterized in that said mirror (76) is moulded into said second support member (78).

6. A detector assembly according to claim 1, characterized in that said first optical member is a collection lens (54) and that there is provided a filter (56) between said collection lens (54) and said photodetector (58).

7. A detector assembly according to claim 6, characterized in that said housing (22,24) is comprised of first (22) and second housing members (24), each having recessed portions therein, which, when the housing members (22,24) are joined together, form recesses (64,66) for accommodating said collection lens (54), filter (56) and photodetector (58), thereby accurately aligning them within said housing (22,24).

8. A detector assembly according to claim 7, characterized in that said first housing member (22) includes a pair of depending leg portions (42) which are adapted to be snapped into engagement with corresponding apertures (46) in said second housing member (24) for joining the housing members (22,24) together.

9. A detector assembly according to claim 1, characterized in that said housing (22,24) further includes a pair of third support members (36,38) for supporting the housing (22,24) in the optical reader, said third support members (36,38) including flexible portions (36) for snap fitting the assembly (20) into engagement with the optical reader.

10. A detector assembly according to claim 9, characterized in that said third support member (36,38) further includes a plurality of second pin members (38) for locating the assembly (20) in the optical reader.

# FIG. 1

# FIG. 2

# FIG. 3

FIG. 4

36

34

36

44

28

30

32

77

78

26

36

34

36

56

56

72

55

FIG. 5

FIG. 6

76

78

80

76

78

80

FIG. 7

FIG. 8